Europäisches Patentamt

European Patent Office

Office européen des brevets

(11) Veröffentlichungsnummer: **0 505 690 A1**

# EUROPÄISCHE PATENTANMELDUNG

(21) Anmeldenummer: **92101495.7**

(22) Anmeldetag: **30.01.92**

(51) Int. Cl.5: **B60Q 3/02**, B60N 3/14,
F23Q 7/00, F21V 8/00,
F21V 19/00

(30) Priorität: **28.02.91 DE 4106322**

(43) Veröffentlichungstag der Anmeldung:
**30.09.92 Patentblatt 92/40**

(84) Benannte Vertragsstaaten:
**DE ES FR GB IT**

(71) Anmelder: **SCHOELLER & CO.**
**Elektrotechnische Fabrik GmbH & Co.**
**Mörfelder Landstrasse 115-119 Postfach 70**
**09 54**
**W-6000 Frankturt am Main(DE)**

(72) Erfinder: **Fischer, Alexander**
**Am Krämersrain 17**
**W-6380 Bad Homburg(DE)**
Erfinder: **Merchel, Roland**
**Annastrasse 79**
**W-6070 Langen(DE)**

(74) Vertreter: **Rupprecht, Klaus, Dipl.-Ing. et al**
**c/o ABB Patent GmbH, Postfach 10 03 51**
**W-6800 Mannheim 1(DE)**

(54) **Zigarrenanzünder mit einem als Spannhülse wirkenden Leuchtring.**

(57) 2.1 Zur Positionskennzeichnung von Bedienelementen, insbesondere Zigarrenanzündern am Armaturenbrett eines Kraftfahrzeuges, verwendet man einen das Bedienelement umschließenden Leuchtring (1) mit einer seitlich angeformten Lichtleitzunge (15), die eine Lampenanordnung (2-5) trägt.

2.2 Um die Zahl der für die Lampenanordnung benötigten Teile zu reduzieren und einen relativ einfachen, kompakten Aufbau zu erreichen, wird ein zur Lampenanordnung (2-5) gehöriger Lampenschalter (2) materialeinheitlich in die Lichtleitzunge (15) des Leuchtringes integriert. Zusammen mit in den Lampenhalter (2) eingesetzten Kontaktteilen (3,4) wird eine die Lampe (30) aufnehmende Lampenfassung (2-4) gebildet.

Fig. 1

EP 0 505 690 A1

EP 0 505 690 A1

Die Erfindung betrifft einen Zigarrenanzünder der im Oberbegriff des Anspruchs 1 genannten Art.

Aus der DE-PS 25 35 080 ist eine Beleuchtungseinrichtung für Zigarrenanzünder bekannt, die aus einer Lampe, einem Lampengehäuse und einem zwischen Armaturenbrett und Steckdose angeordneten Leuchtring besteht. Die Rückseite des mit Prismen versehenen Leuchtrings ist mit einem als Lichtleiter dienenden Ansatz versehen, auf den ein das Lampengehäuse tragendes und den Ansatz lichtdicht umschließendes Haltestück aufgeklemmt ist. Auf den als Lichtleitzunge wirkenden Ansatz sind Prismen aufgesetzt und derart ausgebildet, daß sich diese zur Lichtumlenkung und gleichzeitig als Klemmstücke für das Lampengehäuse eignen. In das Lampengehäuse ist vor die Glühlampe eine Blechblende eingelegt, die gleichzeitig auch die Masseverbindung der Glühlampe zum Steckdosengehäuse herstellt. Hierzu weist die Blechblende eine Zunge auf, die mit einem an der Lampenfassung angebrachten Kontakt zusammenwirkt. Durch schräge Flächen auf dem prismatisch ausgebildeten Klemmstück für das Lampengehäuse wird das von der Lampe kommende Licht in die Lichleitzunge des Leuchtrings umgelenkt und über die an der Rückseite des Flansches befindlichen Prismen über den gesamten Flansch verteilt, so daß ein gleichmäßiger Lichtring um die Steckdosenöffnung vorhanden ist.

Die vorbekannte Beleuchtungseinrichtung besteht aus mehreren, teilweise recht komplizierte Teilen, zu denen ein auf die Lichtleitzunge aufsetzbares Lampengehäuse und eine in dieses Gehäuse einsteckbare Lampenfassung gehören. Bei der Herstellung der Beleuchtungseinrichtung müssen somit zunächst drei unterschiedliche Teile erstellt und dann unter Einbeziehung der ebenfalls benötigten Lampe zusammengesetzt werden.

Aufgabe der Erfindung ist es ausgehend vom Oberbegriff des Anspruchs 1 eine Beleuchtungseinrichtung zu schaffen, die mit relativ wenigen, einfach aufgebauten Montageteilen auskommt, kompakt und platzsparend aufgebaut ist und leicht montiert werden kann.

Diese Aufgabe wird durch die im Anspruch 1 gekennzeichneten Merkmale gelöst. Zweckmäßige Ausgestaltungen und Weiterbildungen des Erfindungsgegenstandes sind in den Unteransprüchen genannt.

Durch ein materialeinheitliches Anformen des Lampenhalters an der Lichtleitzunge gelingt es, einen neuartigen Leuchtring aufzubauen, der von dem ausgehend in wenigen Montageschritten durch Einsetzen von Kontaktteilen zum kontaktieren einer für die Beleuchtung erforderlichen Lampe eine komplette Lampenfassung geschaffen wird.

In zweckmäßiger Weiterbildung der Erfindung ist der Lampenhalter nach mindestens einer Seite hin offen und ermöglicht dadurch ein leichtes Einsetzen der Lampe, die durch eine vorzugsweise aus lichtundurchlässigem Material bestehende Abdeckkappe durch Schließen des Lampenhalters geschützt wird.

Ein besonders einfacher Aufbau des Lampenhalters ergibt sich dadurch, daß das freie Ende der Lichtleitzunge in eine sich in gleicher Richtung erstreckende Bodenplatte übergeht. Am Ende der Bodenplatte befindet sich eine zu ihr rechtwinklig angeordnete Rückwand, an der mindestens eines der Kontaktteile der Lampenfassung befestigt ist. Bodenplatte, Rückwand und Kontaktteile bilden somit die Grundelemente der Lampenfassung.

Zur Stabilisierung der Rückwand und zur Verbesserung des Materialflusses beim Spritzvorgang ist beidseitig der Bodenplatte je eine zur Rückwand reichende Seitenwand angeformt. In der anderen Richtung beschränkt sich die Ausdehnung der beiden Seitenwände auf den Bereich der Lampenfassung, so daß der Bereich des Lampenkolbens frei zugänglich bleibt. Zwischen den beiden Seitenwänden liegen die zur Kontaktierung der Lampe benötigten Kontaktteile.

Als Kontaktteile dienen ein Minuskontaktteil und ein Pluskontaktteil. Beide besitzen jeweils zwei klammerartig zueinander angeordnete Kontaktbügel, die den flachsteckerartigen Sockel der Lampe beidseitig erfassen. Jeweils einer der beiden Kontaktbügel ist mit einem Rastnocken versehen, der in eine Vertiefung des Lampensockels einrastet, während der andere Kontaktbügel einen Kontaktdraht der Lampe kontaktiert.

Einen besonders vorteilhaften Aufbau ermöglicht das Minuskontaktteil, das mittels weniger Biegevorgänge in eine T-artige Grundform gebracht wird. Ein in seiner Form einem Schwert ähnelnder Blechstreifen bildet das gestanzte Ausgangsteil mit einer Blende, zwei ersten Kontaktbügeln und einem die Blende mit den Kontaktbügeln verbindenden, über diese hinaus verlängerten Kontaktstreifen. Durch ein erstes Abbiegen des Kontaktstreifens um 180° und ein zweites Abbiegen seines freien Endes zu einem um 90° abgewinkelten Kontaktschenkel, wird die T-Form erreicht. Zur abschließenden Gestaltung des Minuskontaktteils müssen nun lediglich die beiden ersten Kontaktbügel um 90° gekippt und in ihre Bügelform gebracht werden.

Versieht man das Minuskontaktteil an seinem im Bereich der 180°-Biegung liegenden Ende mit einem Haltelappen, so kann es in einen Halteschlitz an der Rückwand des Lampenhalters an einer Haltenase befestigt werden, so daß es in eine gut fixierte Einbaustellung gelangt, in der sein Kontaktschenkel zum

2

EP 0 505 690 A1

Kontaktieren eines Minuspotential führenden Blechteils die Lichtleitzunge an einem dafür vorgesehenen Kontaktdurchlaß durchdringen kann.

Das Pluskontaktteil entspricht, soweit es den Aufbau der Konaktbügel betrifft, dem Minuskontaktteil. In abgewickeltem Zustand hat es etwa die Form einer dreizinkigen Gabel, mit einem dem mittleren Zinken entsprechenden Abdeckstreifen und den beidseitig dazu angeordneten zweiten Konataktbügeln. Im Bereich des Gabelgriffes ist eine Stirnplatte ausgebildet, die wie die Kontaktbügel um 90° hochgebogen wird und das Ende der beiden sich klammerartig gegenüberstehenden zweiten Kontaktbügel bildet.

Zum Anschluß eines Stromkabels dient ein Flachkontakt, der mit seinem Haltefuß zunächst die Rückwand es Lampenhalters an einem Auslaßschlitz und dann die Stirnwand über einen Verbindungsschlitz durchdringt und das Pluskontaktteil mit Hilfe von an seinem Fußende ausgebildeten Schränklappen am Lampenhalter fixiert.

Die Lichtleitzunge ist beiseitig mit prismatisch ausgebildeten Halteschienen versehen, die einerseits von der Lampe abgestrahltes Licht aufnehmen und andererseits zum Aufsetzen der Abdeckkappe dienen. Die im Querschnitt U-förmige Abdeckkappe ist hierzu an den Enden ihrer beiden Kappenschenkel mit Haltenuten versehen, die einen Eingriff an den beiden Halteschienen ermöglichen.

Die Abdeckkappe besitzt auf ihrer den Lampenkolben schützenden Seite eine Stirnwand. Damit hierdurch die elastische Beweglichkeit der Kappenschenkel nicht eingeschränkt wird, ist die Stirnwand im Bereich der freien Kappenschenkel mit Trennschlitzen versehen. Bei Bedarf, zum Beispiel zur Aschenbecherbeleuchtung ist es möglich einen Teilbereich der Abdeckkappe nach oben hin als Lichtaustrittsöffnung zu durchbrechen.

Ein Ausführungsbeispiel der Erfindung ist in den Zeichnungen dargestellt und wird im folgenden näher beschrieben.

Es zeigen:

Fig. 1     eine Seitenansicht des Leuchtrings der Beleuchtungseinrichtung mit dem angeformten Lampenhalter,

Fig. 2     eine Draufsicht auf den Leuchtring nach Fig. 1,

Fig. 3     einen Schnitt entlang der Linie III-III in Fig. 2,

Fig. 4     eine Vorderansicht des Leuchtringes nach Fig. 1,

Fig. 5     einen Schnitt entlang der Linie V-V in Fig. 2,

Fig. 6     einen Schnitt entlang der Linie VI-VI in Fig. 2,

Fig. 7     einen Schnitt gemäß Fig. 3, jedoch mit in den Lampenhalter eingebauten Kontaktteilen und eingesetzter Lampe,

Fig. 8     eine Abwicklung des Minuskontaktteiles mit angesetzter Blende,

Fig. 9     eine Draufsicht auf das Minuskontaktteil nach Fig. 8 im Endzustand,

Fig. 10    eine Seitenansicht des Minuskontaktteils nach Fig. 9,

Fig. 11    eine Abwicklung des Pluskontaktteiles,

Fig. 12    eine Draufsicht auf das Pluskontaktteil nach Fig. 11,

Fig. 13    eine Ansicht des Pluskontaktteiles nach Fig. 12 von unten,

Fig. 14    eine Ansicht des Pluskontaktteiles nach Fig. 12 von hinten,

Fig. 15    eine Seitenansicht des Pluskontaktteiles nach Fig. 12,

Fig. 16    eine Draufsicht auf den mit dem Pluskontaktteil nach Fig. 12 zu verbindenden Flachkontakt zum Anschluß der Versorgungsleitung,

Fig. 17    eine Seitenansicht des Flachkontaktes des nach Fig. 16 teilweise im Schnitt,

Fig. 18    eine Vorderansicht der auf den Lampenhalter aufklemmbaren Abdeckkappe,

Fig. 19    eine Draufsicht auf die Abdeckkappe nach Fig. 18,

Fig. 20    einen Schnitt entlang der Linie XX-XX in Fig. 19,

Fig. 21    einen Schnitt entlang der Linie XXI-XXI in Fig. 19 und

Fig. 22    einen Schnitt entlang der Linie XXII-XXII in Fig. 19.

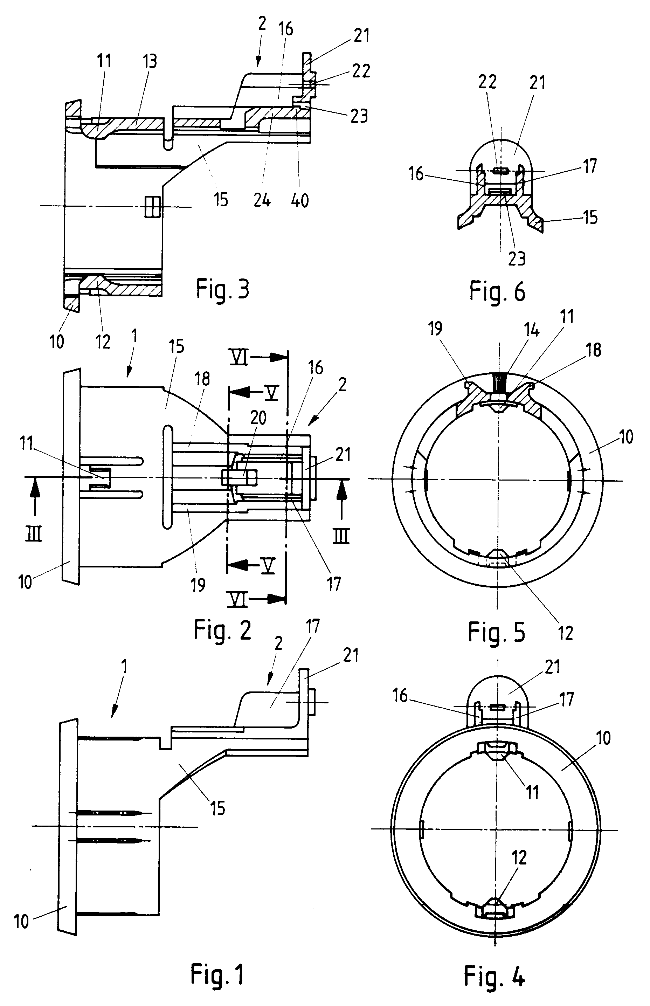

Wie die Figuren 1 bis 7 zeigen, besteht die Beleuchtungseinrichtung aus einem Leuchtring 1, einem in den Leuchtring integrierten Lampenhalter 2, einem Minuskontaktteil 3, einem Pluskontaktteil 4, einer Abdeckkappe 5 und einer Lampe 30.

Der Leuchtring kann ein beliebiges Teil, z.B. ein Schloß, einen Schalter usw. umschließen, das im Dunkeln sichtbar gemacht werden soll. Beim vorliegenden Beispiel dient der Leuchtring 1 gleichzeitig als Spannhülse zur Frontalbefestigung der Steckdose eines Zigarrenanzünders am Armaturenbrett eines Kraftfahrzeuges. Er besitzt hierzu auf seiner Vorderseite einen Flansch 10, der auf dem Armaturenbrett aufliegt und auf dessen Rückseite eine Vielzahl kleiner Prismen 14 ausgebildet ist, die für eine gleichmäßige Beleuchtung des Flansches 10 sorgen. An den Flansch schließt sich ein das Armaturenbrett durchdringender zylinderförmiger Dichtleitkörper 13 an, der an seinem Ende einseitig in eine Lichtleitzunge 15

3

übergeht. Der Lichtleitkörper 13 ist seitlich mit Halteklaue 11,12 versehen, die beim Einsetzen einer Steckdosenhülse in den in eine Öffnung des Armaturenbrettes eingeschobenen Leuchtring 1 nach außen gedürckt werden und sich dabei an der Wand des Armaturenbrettes festklammern.

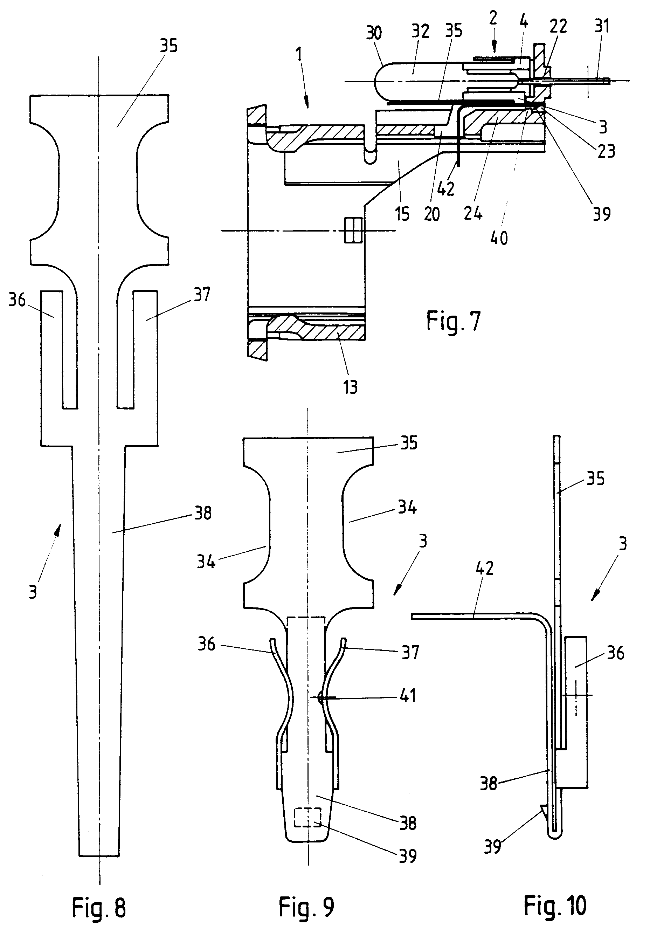

Der an der Lichtleitzunge 15 des Leuchtringes 1 angeformte Lampenhalter 2 ist mit zwei Seitenwänden 16,17, zwei primenförmigen Halteschienen 18,19 zum Aufklemmen der Abdeckkappe 5, einem rechteckförmigen Kontaktdurchlaß 20 und einer Rückwand 21 versehen. Wie man in Fig. 7 erkennt, sind zwischen den beiden Seitenwänden 16,17 des Lampenhalters 2 das Minuskontaktteil 3 und das Pluskontaktteil 4 so eingesetzt, daß diese drei Teile zusammen die Fassung für die Lampe 30 bilden. Der ähnlich wie ein Flachstecker ausgebildete Sockel der Lampe 30 ist durch eine stegartige Verdickung in einen oberen und unteren Sockelteil getrennt, wobei der untere Sockelteil von ersten Kontaktbügeln 36,37 des Minuskontaktteils und der obere Sockelteil dur zweite Kontaktbügel 45,46 des Pluskontaktteils erfaßt und kontaktiert wird. Das Minuskontaktteil 3 liegt über einer Masseverbindung am Minuspol eine Autobatterie, während das Pluskontaktteil 4 mit einem Flachkontakt 31 verbunden ist, der über eine Leitung am Pluspol der Autobatterie angeschlossen ist.

Die Fig. 8 bis 10 lassen den Aufbau des Minuskontaktteils erkennen. Die in Fig. 8 dargestellte Abwicklung des Minuskontaktteiles 3 läßt hintereinander angeordnet einen Kontaktstreifen 38, erste Kontaktbügel 36,37 und eine Blende 35 erkennen. Etwa in der Mitte dieses Stanzteils wird der Kontaktstreifen um 180° nach hinten zurückgebogen und im Bereich seines freien Endes noch einmal um 90° zu einem Kontaktschenkel 42 abgewinkelt. In entgegengesetzter Richtung hochgebogen bilden die ersten Kontaktbügel 36,37 eine klammerartige Anordnung, die zur Kontaktierung des Lampensockels dienen soll. Die zum Abdecken des Lampenkolbes 32 vorgesehene Blende 35 besitzt zwei Aussparungen 34, über die das Licht der Lampe 30 beidseitig über die Lichtleitzunge 15 zum Lichtleitkörper 13 und von diesem zum Flansch 10 gelangt.

Bei einem in den Lampenhalter 2 eingesetzten Minuskontaktteil 3 wird sein 180° Biegeende in einen Halteschlitz 23 eingesteckt, in dem eine Haltenase 40 so ausgebildet ist, daß der am Kontaktstreifen 38 herausgezogene Haltelappen 39 an dieser verrasten kann und dadurch das Minuskontaktteil fixiert. Der Kontaktschenkel 42 ist durch einen in der Lichtleitzunge 15 vorgesehen Kontaktdurchlaß 20 hindurchgeführt. Durch seine federnde Elastizität ist es ihm möglich, den Blechmantel einer eingesetzten Steckdosenhülse zu kontaktieren und so eine Verbindung zur Masse bzw. Minuspotential herzustellen.

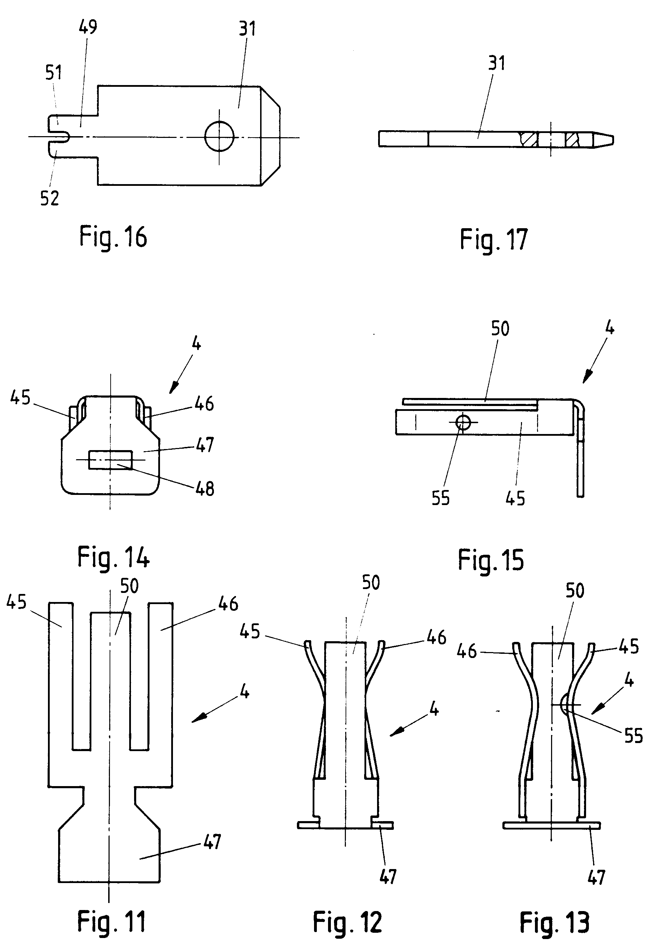

Die Abwicklung des in den Lampenhalter 2 einzusetzenden Pluskontaktteiles 4 ist in Fig. 11 dargestellt. Das Stanzteil besteht aus einer Stirnplatte 47, einem Abdeckstreifen 50 und beidseitig dazu angeordneten Klemmbügeln 45,46. Durch Biegen wird das Pluskontaktteil 4 in die Form nach Fig. 12 bis 15 gebracht. Ein rechteckiges Abbiegen der beiden Kontaktbügel 45,46 und der Stirnplatte 47 läßt einen nach oben und vorne offenen Kontaktschuh entstehen, dessen Ausbildung weitgehend der Anordnung der ersten Kontaktbügel 36,37 des Minuskontaktteils 3 entspricht.

In den Fig. 16 und 17 ist ein Flachkontakt 31 mit einem Haltefuß 49 dargestellt, der am Endes ses Haltefußes 49 mit zwei Schrägklappen 51,52 versehen ist. Der zum Anschluß einer positiven potentialführenden Leitung dienende Flachkontakt 31 wird mit dem Pluskontaktteil 4 derart verbunden, daß sein Haltefuß 49 zunächst einen in der Rückwand 21 des Lampenhalters 2 vorgesehenen Auslaßschlitz und dann die Stirnplatte 47 an einem Verbindungsschlitz 48 durchdringt. Ein Verschränken der Schrägklappen 51 hinter der Stirnplatte 47 fixiert den Flachkontakt 31, als auch das Pluskontaktteil 4 am Lampenhalter 2.

Sowohl bei den ersten Kontaktbügeln 36,37 wie auch bei den zweiten Kontaktbügeln 45,46 ist einer der beiden Kontaktbügel 37,45 mit einem Rastnocken 41,55 versehen, der zum Einrasten in eine Vertiefung des Lampensockels dient. Die beiden versetzt zueinander angeordneten Rastnocken 41 und 55 gewährleisten einen festen Sitz des Lampensockels zwischen den ersten Kontaktbügeln 36,37 des Minuskontaktteils 3 und den zweiten Kontaktübeln 45,46 des Pluskontaktteils 4. Die jeweils nicht mit einem Rastnocken 41,55 versehenen Kontaktbügel 36 und 46 dienen zur Kontaktgabe mit den aus dem Lampenkolben 32 der Lampe 30 herausragenden und am Sockel anliegenden Ende der beiden Haltedrähte des Glühfadens.

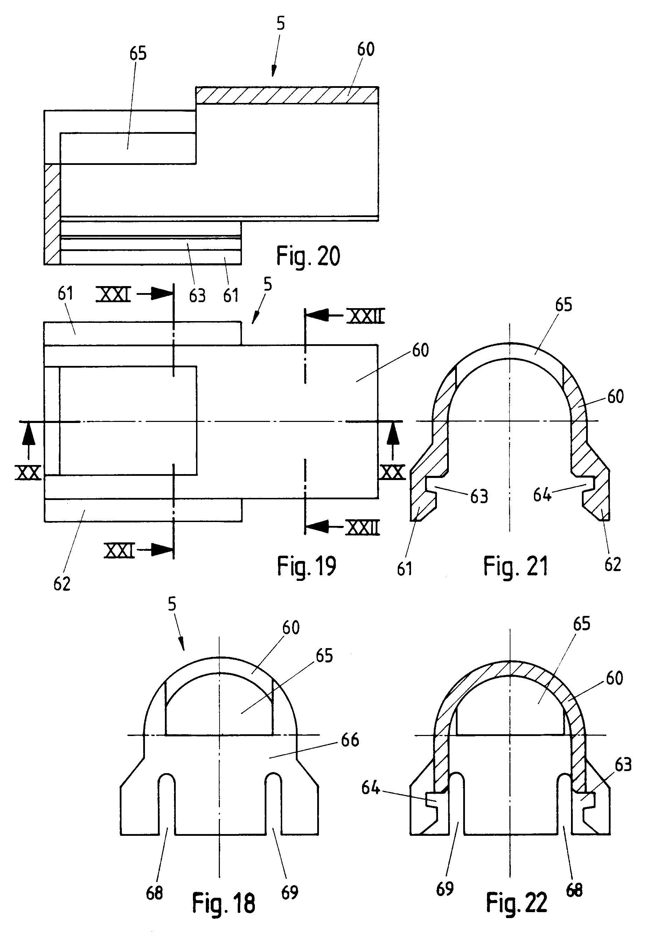

In den Fig. 18 bis 22 ist die Haltekappe 5 dargestellt, die durch ein U-förmiges Kappenteil 60 gebildet wird, das auf Halteschienen 18,19 des Lampenhalters aufgeklemmt wird. Die auf der Lichtleitzunge 15 ausgebildeten prismenförmigen Halteschienen 18,19 dienen mit ihren Schrägflächen einerseits zur Aufnahme des von der Lampe abgegebenen Lichtes und außerdem zur Befestigung der Abdeckkappe 5. Zu diesem Zweck sind die in den Schnittzeichnungen nach Fig. 21 und 22 dargestellten beiden Kappenschenkel 61,62 des Kappenteils60 mit Haltenuten 63,64 versehen, so daß sie sich an den Halteschienen 18,19 festklammern können. Bei Bedarf, z.B. zur Beleuchtung eines Aschenbechers ist das Kappenteil 60 im vorderen Bereich mit einer Lichtaustrittsöffnung 65 versehen. Weiterhin befindet sich an der Vorderseite der Abdeckkappe 5 eine Stirnwand 66, die mit zwei Trennschlitzen 68 und 69 versehen ist, damit die Kappenschenkel 61,62 beim Aufklemmen auf die Halteschienen 18,19 nach außen wegfedern können.

4

Beim Zusammenbau der Beleuchtungseinrichtung wird zunächst das Minuskontaktteil 3 in den Lampenhalter 2 eingesetzt, wobei der Kontaktschenkel 42 des Kontaktstreifens 38 durch den Kontaktdurchlaß 20 der Lichtleitzunge 15 gesteckt wird und das freie Biegeende des Kontaktstreifens 38 mit dem Haltelappen 39 in den Halteschlitz 23 der Rückwand 21 des Lampenhalters 2 gelangt. Der aus dem Kontaktstreifen 38 herausragende Haltelappen 39 wird über die Haltenase 40 im Lampenhalter 2 geschoben und rastet hinter der Haltenase 40 ein, so daß das Minuskontteil 3 im Gehäuse 2 festliegt. Anschließend wird das Pluskontaktteil 4 in den Lampehalter 2 eingesetzt und mit dem Flachkontakt 31 verbunden. Dann wird die Lampe 30 mit ihrem Sockel in die Lampenfassung 2-4 eingeschoben, bis die Rastnocken 41 und 55 in die Vertiefung des Sockels einrasten. Zum Schluß wird die Abdeckkappe 5 auf die Schienen 18,19 aufgeklemmt.

<u>Bezugszeichenliste</u>

Diese Anlage ist kein Teil der Anmeldung, sondern soll ausschließlich deren Prüfung durch das Patentamt erleichtern.

| 1 | Leuchtring |
|---|---|
| 2 | Lampenhalter |
| 3 | Minuskontaktteil |
| 4 | Pluskontaktteil |
| 5 | Abdeckkappe |
| 10 | Flansch |
| 11 | Halteklaue |
| 12 | Halteklaue |
| 13 | Lichtleitkörper |
| 14 | Prisma |
| 15 | Lichtleitzunge |
| 16 | Seitenwand |
| 17 | Seitenwand |
| 18 | Halteschiene |
| 19 | Halteschiene |
| 20 | Kontaktdurchlaß |
| 22 | Auslaßschlitze |
| 23 | Halteschlitz |
| 30 | Lampe |
| 31 | Flachkontakt |
| 32 | Lampenkolben |

| | |
|---|---|
| 34 | Ausnehmung |
| 35 | Blende |
| 36 | erste Kontaktbügel |
| 37 | " |
| 38 | Kontaktstreifen |
| 39 | Haltelappen |
| 40 | Haltenase |
| 41 | erster Rastnocken |
| 42 | Kontaktschenkel |
| 45 | zweite Kontaktbügel |
| 46 | "        " |
| 47 | Stirnplatte |
| 48 | Verbindungsschlitz |
| 49 | Haltefuß |
| 50 | Abdeckstreifen |
| 51 | Schränklappen |
| 55 | zweiter rastnocken |
| 60 | Kappenteil |
| 61 | Kappenschenkel |
| 62 | " |
| 63 | Haltenut |
| 64 | " |
| 65 | Lichtaustrittsöffnung |
| 66 | Stirnwand |
| 68 | Trennschlitz |
| 69 | " |

**Patentansprüche**

1. Beleuchtungseinrichtung, insbesondere für einen Zigarrenanzünder, mit einem als Spannhülse wirkenden Leuchtring (1), an dem eine als Lichtleiter dienende Lichtleitzunge (15) seitlich angeformt ist, die ihrerseits eine zur Beleuchtung des Leuchtringes (1) vorgesehene Lampenanordnung (2-5) mit einer Lampe (30) trägt, dadurch gekennzeichnet, daß ein zur Lampenanordnung (2-5) gehöriger Lampenhalter (2) materialeinheitlich in die Lichtleitzunge (15) des Leuchtringes (1) integriert ist und zusammen mit in den Lampenhalter (2) eingesetzten Kontaktteilen (3,4) eine die Lampe (30) aufnehmende Lampenfassung (2-4) bildet.

2. Beleuchtungseinrichtung nach Anspruch 1, dadurch gekennzeichnet, daß der Lampenhalter (2) nach mindestens einer Seite offen ist und eine, vorzugsweise aus lichtundurchlässigem Material bestehende Abdeckkappe (5) den Lampenhalter (2) schließt.

3. Beleuchtungseinrichtung nach mindestens einem der vorhergehenden Ansprüche, dadurch gekennzeichnet, daß das freie Ende der Lichtleitzunge (15) in eine sich in gleicher Richtung erstreckende Bodenplatte (24) übergeht, von deren Ende ausgehend sich wiederum eine rechtwinklig zur Bodenplatte (24) und damit parallel zur Montageebene des Leuchtringes (1) erstreckende Rückwand (21) des Lampenhalters (2) anschließt, an der mindestens eines der Kontaktteile (3,4) der Lampenfassung (2-4) befestigt ist.

4. Beleuchtungseinrichtung nach mindestens einem der vorhergehenden Ansprüche, dadurch gekennzeichnet, daß beidseitig der Bodenplatte (24) je eine bis zur Rückwand (21) reichende Seitenwand (16,17) angeformt ist, zwischen denen die beiden zur Kontaktierung der Lampe benötigten Kontaktteile (3,4) angeordnet sind, die sich aber vorzugsweise nur im Bereich der Lampenfassung und nicht im Bereich des Lampenkolbens (32) erstrecken.

5. Beleuchtungseinrichtung nach mindestens einem der vorhergehenden Ansprüche, dadurch gekennzeichnet, daß die beiden Kontaktteile (3,4), als Minuskontaktteil (3) und als Pluskontaktteil (4) dienen und jeweils zwei klammerartig zueinander angeordnete Kontaktbügel (36,37;45,46) besitzen, die den flachsteckerartigen Sockel der Lampe beidseitig erfassen und von denen jeweils ein mit einem Rastnocken (41,55) versehener Kontaktbügel (37,45) in eine Vertiefung des Lampensockels einrastet und der andere Kontaktbügel (36,46) einen Kontaktdraht der Lampe kontaktiert.

6. Beleuchtungseinrichtung nach mindestens einem der vorhergehenden Ansprüche, dadurch gekennzeichnet, daß das Minuskontaktteil (3) in abgewickeltem Zustand etwa die Form eines Schwertes besitzt, wobei sich an einen der Klinge entsprechenden Kontaktstreifen (38) beidseitig von diesem ausgehend, quasi den Handschutz des Schwertes bildend, in geringem Abstand zu ihm parallellaufend erste Kontaktbügel (36,37) anschließen und eine Blende (35) mit beidseitigen Ausnehmungen (34) dem Griff des Schwertes entspricht, und dieses Stanzteil dann durch eine 180 Grad Biegung eines ersten Teilstücks des Kontaktstreifens (38) und ein weiteres Abwinkeln seines freien Endes um 90 Grad zu einem T umgeformt wird, bei dem der horizontale Querbalken durch die Blende und das zweite Teilstück des Kontaktstreifens (38) gebildet wird und sein freies, als Kontaktschenkel (42) dienendes Ende den vertikalen Stützbalken bildet, und bei dem die beiden ersten Kontaktbügel (36,37) aus einer horizontalen in eine vertikale Position zum zweiten Teilstück des Kontaktstreifens (38) hochgebogen sind.

7. Beleuchtungseinrichtung nach mindestens einem der vorhergehenden Ansprüche, dadurch gekennzeichnet, daß beim Minuskontaktteil (3) im Bereich seines 180-Grad-Biegeendes ein Haltelappen (39) ausgestanzt ist, der sich beim Einsetzen des Minuskontaktteils (3) in einen Halteschlitz (23) der Rückwand (21) des Lampenhalters (2) an einer Haltenase (40) verankert, und das Minuskontaktteil (3) in seiner Einbaustellung mit seinem Kontaktschenkel (42) zum Kontaktieren eines Minuspotential führenden Blechteils die Lichtleitzunge (15) an einem dafür vorgesehenen Kontaktdurchlaß (20) durchdringt.

8. Beleuchtungeinrichtung nach mindestens einem der vorhergehenden Ansprüche, dadurch gekennzeichnet, daß das Pluskontaktteil (4) in abgewickeltem Zustand etwa die Form einer dreizinkigen Gabel besitzt, mit einem dem mittleren Zinken entsprechenden Abdeckstreifen (50) und beidseitig dazu angeordneten zweiten Kontakbügeln (45,46), denen sich an ihrem nicht freien Ende eine Stirnplatte (47) anschließt, und die zweiten Kontaktbügel (45,46) um 90 Grad so hochgebogen sind, daß sie sich klammerartig gegenüberstehen und die in gleicher Richtung hochgebogene Stirnplatte (47) das Ende der einseitig offenen Klammer markiert.

9. Beleuchtungseinrichtung nach mindestens einem der vorhergehenden Ansprüche, dadurch gekennzeichnet, daß ein Flachkontakt (31) mit seinem Haltefuß (49), an dessem freien Ende Schränklappen (51) ausgebildet sind, zunächst die Rückwand (21) des Lampenhalters (2) an einem Auslaßschlitz (22) und dann die Stirnplatte (47) über einen Verbindungsschlitz (48) durchdringt und durch Verschränken der Schränklappen (51) sowohl der Flachkontakt (31) als auch das Pluskontaktteil (4) am Lampenhalter (2) fixiert sind.

10. Beleuchtungseinrichtung nach mindestens einem der vorhergehenden Ansprüche, dadurch gekennzeichnet, daß die Lichtleitzunge (15) beidseitig mit prismatisch ausgebildeten Halteschienen (18,19) versehen ist, die einerseits von der Lampe (30) abgestrahltes Licht aufnehmen und andererseits zum Aufsetzen der Abdeckkappe (5) dienen, und die im Querschnitt U-förmige Abdeckkappe (5) an den Enden ihrer beiden Kappenschenkel (61,62) mit einen Eingriff an den Halteschienen (18,19) ermöglichenden Haltenuten (63,64) versehen sind.

11. Beleuchtungseinrichtung nach mindestens einem der vorhergehenden Ansprüche, dadurch gekennzeichnet, daß die Abdeckkappe (5) auf der Seite des Lampenkolbens (32) eine Stirnwand (66) besitzt, die im Bereich der freien Kappenschenkel (61,62) mit Trennschlitzen (68,69) versehen ist, die eine elastische Beweglichkeit der Kappenschenkel (61,62) ermöglichen, und daß ein Teilbereich der Abdeckkappe (5) nach oben hin als Lichtaustrittsöffnung (65) durchbrochen ist.

Fig. 3

Fig. 6

Fig. 2

Fig. 5

Fig. 1

Fig. 4

Fig. 7

Fig. 8

Fig. 9

Fig. 10

Fig. 16

Fig. 17

Fig. 14

Fig. 15

Fig. 11

Fig. 12

Fig. 13

EP 0 505 690 A1

Fig. 20

Fig. 19

Fig. 21

Fig. 18

Fig. 22

12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2 436 939 (SOCIETE DE SIGNALISATIONS AUTOMOBILES, SEIMA) * Seite 4, Zeile 9 – Zeile 29; Ansprüche 1,5-7; Abbildungen 5-7 * | 1-4 | B60Q3/02 B60N3/14 F23Q7/00 F21V8/00 F21V19/00 |
| Y | | 10 | |
| A | | 9 | |
| | --- | | |
| Y,P | EP-A-0 448 501 (SUELEC-AUTO, S.A.) * Zusammenfassung; Ansprüche 1,2; Abbildungen 1-4,10,11 * * Spalte 2, Zeile 47 – Zeile 56 * * Spalte 3, Zeile 1-3 * * Spalte 3, Zeile 11 – Zeile 16 * * Spalte 3, Zeile 27 – Zeile 29 * * Spalte 4, Zeile 13 – Zeile 45 * | 10 | |
| A,P | | 1-3,5,11 | |
| | --- | | |
| A | US-A-4 899 263 (LUPOLI ET AL.) * Spalte 5, Zeile 11 – Zeile 27 * * Spalte 5, Zeile 57 – Zeile 63 * * Spalte 8, Zeile 6 – Zeile 21 * * Abbildungen 1,3,8,11-14 * | 1,5-8 | |
| | ----- | | RECHERCHIERTE SACHGEBIETE (Int. Cl.5 ) B60Q B60N F23Q F21V |

Der vorliegende Recherchenbericht wurde für alle Patentansprüche erstellt

| Recherchenort | Abschlußdatum der Recherche | Prüfer |
|---|---|---|
| DEN HAAG | 15 JUNI 1992 | DE MAS A.G. |